# EUROPÄISCHE PATENTSCHRIFT

(11) **EP 0 776 438 B1**
(45) Veröffentlichungstag und Bekanntmachung des Hinweises auf die Patenterteilung: **28.04.1999**
(21) Anmeldenummer: 95927674.2
(22) Anmeldetag: 20.07.1995
(51) Int. Cl.: F16K 41/10, F16K 41/04

(54) **ARMATUR MIT FALTENBALGABDICHTUNG**
TAP FITTING WITH BELLOWS-TYPE SEAL
ROBINET POURVU D'UN JOINT D'ETANCHEITE A SOUFFLET

(30) Priorität: 18.08.1994 DE 4429300
(43) Veröffentlichungstag der Anmeldung: 04.06.1997
(73) Patentinhaber: KSB Aktiengesellschaft, 67227 Frankenthal (DE)
(72) Erfinder: RUCKERT, Heinz-Jürgen, D-67259 Grossniedesheim (DE); ILLY, Alois, D-67117 Limburgerhof (DE); STOCK, Hans-Georg, D-67069 Ludwigshafen (DE)
(86) Internationale Anmeldenummer: EP9502860
(87) Internationale Veröffentlichungsnummer: WO9606295

(56) Entgegenhaltungen:
- CH-A- 186 340
- DE-B- 2 507 031
- FR-A- 2 184 143
- FR-A- 2 187 081
- FR-A- 2 511 471
- GB-A- 2 012 394
- US-A- 4 166 607
- US-B- 490 589

## Beschreibung

Die Erfindung betrifft eine Armatur, mit im Gehäuse angeordneter Spindel, an der ein Verschlußstück angeordnet ist und eine im Gehäuse befindliche Spindeldurchführung durch einen Faltenbalg abgedichtet ist, das gehäuseseitige Faltenbalgende mit einer die Spindel umgebenden Buchse dicht verbunden ist, die Buchse in das Gehäuse eingebracht und darin dichtend angeordnet ist, wobei die Buchse durch ein Spannelement gehalten ist.

Armaturen weisen gewöhnlich eine Betätigungsspindel auf, mit deren Hilfe ein innerhalb des Armaturengehäuses befindliches Verschlußstück in seiner Position veränderbar ist. Bei Hubventilen, unabhängig davon, ob es sich um drehende oder steigende Spindeln handelt, ist ein Ende eines Faltenbalges gewöhnlich mit dem Verschlußstück verbunden und das andere Ende des Faltenbalges ist dichtend innerhalb des Gehäuses befestigt. Mit dem Faltenbalg soll ein innerhalb des Gehäuses befindliches Medium am Durchtritt durch eine die Spindel umgebende Gehäuseöffnung gehindert werden.

Zur Befestigung des gehäuseseitigen Faltenbalgendes sind unterschiedliche Mittel bekannt. Durch die GB-A-2 012 394 ist eine oberbegriffsmäßige Armatur mit sog. Stützringe bekannt, die zwischen einem Armaturengehäuse und einem das Armaturengehäuse verschließenden Deckel mit ihrem äußeren Durchmesser dichtend eingespannt werden. Auf der zum Absperrorgan weisenden Seite des Stützringes ist der Faltenbalg dicht angeschweißt. Absperrorgan, Betätigungsspindel, Faltenbalg und Stützring werden als vorgefertigte Baueinheit von außen in das Armaturengehäuse eingesetzt. Mittels Schraubelementen und zusätzlicher Dichtungen wird der Stützring zwischen dem Gehäuse und dem Deckel dichtend angepreßt. Da diese Dichtungen und die Schraubelemente jedoch ein plastisches Setzverhalten aufweisen, kann im Laufe der Zeit die Vorspannung verloren gehen. Um eine sichere Gewähr für eine gute Dichtung des Gehäuses zu haben, ist es daher unbedingt erforderlich, von Zeit zu Zeit die Schraubelemente auf ihre Vorspannung hin zu kontrollieren und gegebenenfalls nachzuziehen. Zur Vermeidung dieses Problems ist es auch bekannt, das gehäuseseitige Faltenbalgende direkt mit dem Gehäusedeckel zu verschweißen. Dann muß aber trotzdem der Gehäusedeckel mittels einer separaten Flachdichtung unter Zuhilfenahme von Schraubelementen, beispielsweise Deckelschrauben, dichtend gegenüber dem Gehäuse verspannt werden. Die Deckelschrauben und deren Vorspannung sind auch dann von Zeit zu Zeit zu kontrollieren, um eine ausreichende Dichtheit zu gewährleisten. Es ist auch bekannt, den Gehäusedeckel mit dem Gehäuse zu verschweißen. Das Anschweißen des gehäuseseitigen Faltenbalgendes an den Gehäusedeckeln ist insofern nicht ganz unproblematisch, da hier die Schweißnaht in Bereich eines Überganges zwischen einem kleinen und großen Durchmesser anzubringen ist und daher die Positionierung des Schweißbrenners besondere Sorgfalt erfordert.

Der Erfindung liegt das Problem zugrunde, für durch Faltenbälge abgedichtete Armaturengehäuse eine zuverlässige und einfache Montage des Faltenbalges zu gewährleisten. Die Lösung dieses Problems sieht vor, daß die Stirnseite der Buchse an der vom Faltenbalg abgewandten Seite einen Raum aufweist, der Raum durch eine dünne Wand gegenüber dem Gehäusehals getrennt angeordnet ist, und das Spannelement in den Raum eingepreßt ist. Die Buchse ist bei annährender Durchmessergleichheit sehr einfach mit dem gehäuseseitigen Faltenbalgende verschweißbar, wobei dies unter Zuhilfenahme einer einfachen Vorrichtung erfolgen kann. Der Außendurchmesser der Buchse ist hierbei abhängig von den Montageverhältnissen, der Montageeinrichtung und der Belastungssituation des Faltenbalges sowie der daraus resultierenden Faltenbalgabmessungen.

In den Fällen, in denen die Spindel mit daran angebrachten Faltenbalg durch die abzudichtende Gehäuseöffnung hindurchgeführt wird, weist die Buchse gewöhnlich den gleichen Außendurchmesser wie der Faltenbalg auf, wird aber zwecks einfacherer Montage einen etwas größeren Durchmesser als der Faltenbalg aufweisen. In den Fällen jedoch, in denen eine Montage von der Gehäuseinnenseite her erfolgt, kann die Buchse gegenüber dem Faltenbalg auch einen kleineren Außendurchmesser aufweisen. Dies ist abhängig von den Verwendung findenden Montagearten und den gegebenen Platzverhältnissen. Die Buchse ist in das Gehäuse dichtend eingebracht. Dies kann beispielsweise durch ein Verpressen eines Buchsenrandes mit dem umgebenden Gehäuseteil oder durch Anbringung von Schweißdichtungen erfolgen.

Nach einer Ausgestaltung der Erfindung ist das Spannelement als ein Druckelement ausgebildet. Dies kann ein Druckring sein und beispielsweise montiert werden, nachdem zwischen einer Spindel und einem innerhalb eines Gehäuses befindlichen Verschlußstück eine Verbindung hergestellt wurde. In einem derartigen Fall wäre das verschlußseitige Faltenbalgende bereits an der Spindel angebracht und die Verbindung zwischen Spindelende und Verschlußstück könnte innerhalb des Gehäuses erfolgen, z. B. durch Verschrauben. Das gehäuseseitige Faltenbalgende wäre dabei mit der in das Gehäuse oder in einen Gehäusedeckel eingeschobenen Buchse verbunden, die Buchse selbst aber noch lose im Gehäuse angeordnet. Nach erfolgter Montage zwischen Spindel und Verschlußstück und Anordnung der Buchse an ihrem Bestimmungsort kann der Druckring in den innerhalb der Buchse befindlichen Raum der im Gehäuse oder im Gehäusedeckel befindlichen Buchse eingepreßt werden. Der an der Buchse befindliche Raum kann durch einen dünnwandigen Zylinderabschnitt gebildet sein, welcher an der Buchse stirnseitig angebracht ist. Ein darin einzupressender Druckring würde die Wandfläche dieses Raumes aufweiten, damit in einem begrenzten Bereich den Außendurchmesser zu vergrößern und somit die notwendige Anpressung zwischen dem Buchsenteil und dem umgebenen Gehäuse erhalten. Die Anpressung bewirkt eine sichere Abdichtung zwischen diesen beiden Teilen und gleichzeitig auch eine entsprechende Drehfixierung. Da der Druckring mit dem Durchflußmedium nicht in Berührung kommt, kann er auch aus einem hochfesten normalen Stahl sein. Dessen hohen Festigkeit hat den Vorteil, daß innerhalb des Druckringes eine hohe Druckspannung aufgebaut wird, die sozusagen als elastische Feder wirkt und damit eine elastische Anpressung der Wandfläche an das umgebene Gehäuse bewirkt. Dies kann besonders bei Wechselbeanspruchung von großer Bedeutung sein.

Zum Halten der Buchse durch ein Spannelement weist die Buchse dazu einen Aufnahmeraum auf. Mit Hilfe des Spannelementes wird die in der entsprechenden Position befindliche Buchse an ihrem Einbauort gehalten. Bei dem Spannelement selbst kann es sich um ein starres oder nachgiebiges Bauteil handeln, mit dessen Hilfe eine anpressende Dichtwirkung vom Spannelement auf die Buchse und gegen die umgebende Gehäusewandfläche erfolgt. Hierbei kann auch die Wandfläche einbezogen werden, die den innerhalb der Buchse befindlichen Raum gegenüber der umgebenden Gehäusewandfläche begrenzt.

Weitere Ausgestaltungen der Erfindung sehen vor, daß zwischen Gehäuse und Buchse ein Dichtmittel angeordnet ist oder daß die Buchse in das Gehäuse eingepreßt ist. Die Dichtwirkung kann hierbei unter Zwischenschaltung von zusätzlichen Dichtelementen, die Anordnung eines flüssigen und in gewissen Rahmen aushärtbaren Dichtmittels zwischen Buchse und dem zugehörigen Gehäusesitz oder sonstige bekannte Dichtungsmethoden sein.

Gemäß einer weiteren Ausgestaltung der Erfindung ist die Buchse von der Gehäuseaußenseite oder der Gehäuseinnenseite in die entsprechende Position des Armaturengehäuses eingebracht. Wird z. B. eine Spindel mit daran befestigtem Faltenbalg von außen her durch eine Gehäuseöffnung in das Gehäuseinnere eingeführt, dann wird die Buchse einen geringfügig größeren Außendurchmesser aufweisen, mit dem sie in einem entsprechend angepaßten Gehäusebereich dichtend anliegt.

Nach einer anderen Ausgestaltung der Erfindung ist in der Spindeldurchführung ein an der faltenbalgfernen Stirnseite der Buchse anliegendes, die Spindel umgebendes Dichtelement angeordnet. Mittels einer weiteren Ausgestaltung kann ein auf das Dichtmittel einwirkendes Anpreßelement vorgesehen sein. Mit Hilfe dieses Dichtmittels wird sichergestellt, daß beispielsweise von der Gehäuseaußenseite keine korrosiven Medien zum Bereich der Buchse bzw. zu deren Druckring gelangen können. Genausogut kann das mit dem Dichtmittel zusammenwirkende Anpreßelement auch als eine sogenannte Notstopfbuchse Verwendung finden, u. a. für diejenigen Betriebsfälle, bei denen besonders gefährliche Medien oder auch empfindliche Medien innerhalb der Armatur befindlich sind. Sollte bei einem eventuellen Bruch eines Faltenbalges die Anlage nicht gestoppt werden können, dann könnte mit Hilfe der Notstopfbuchse ein gerade laufender Prozeß noch beendet werden, ehe die Anlage für Reparaturzwecke abgeschaltet wird.

Gemäß einer anderen Ausgestaltung der Erfindung ist das Armaturengehäuse einteilig ausgebildet. Diese besonders widerstandsfähige Gehäusebauart ergibt in Verbindung mit der erfindungsgemäßen Gestaltung eine besonders sichere Armatur, mit einem Minimum an Abdichtflächen.

Ein Ausführungsbeispiel der Erfindung ist am Beispiel eines einteiligen Armaturengehäuses dargestellt. Hierbei zeigen die
Fig. 1 eine in ein Gehäuse gemäß dem Stand der Technik eingepreßte Buchse, die
Fig. 2 eine mit Hilfe eines Druckringes angepreßte Buchse und die
Fig. 3 und 4 vergrößerte Einzelheiten der Buchsenbefestigung.

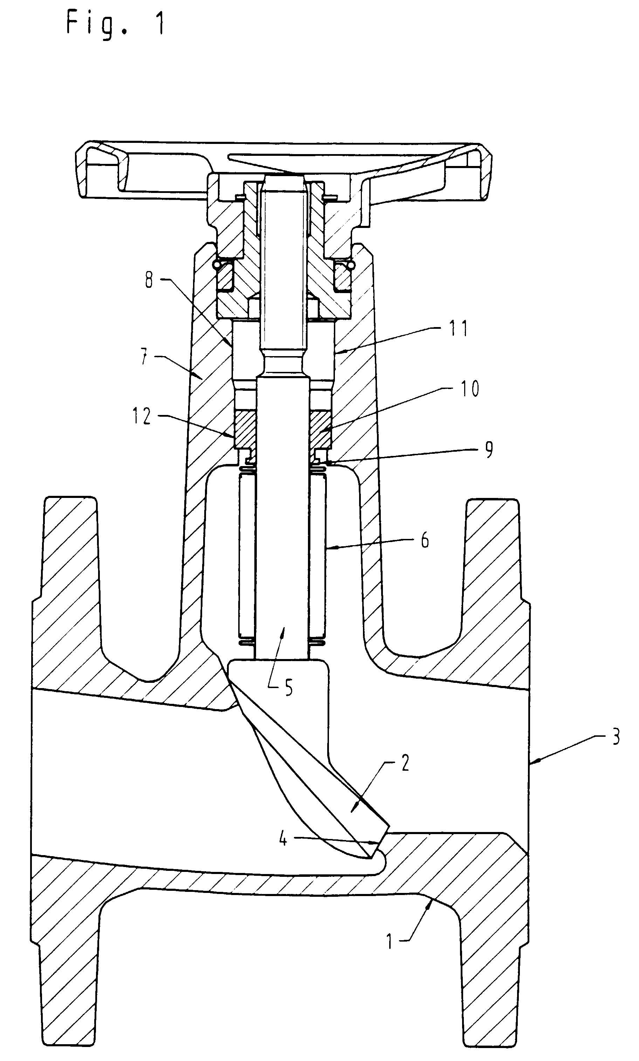

In der Fig. 1 ist ein einteiliges Armaturengehäuse 1 gezeigt. Das darin angeordnete Verschlußstück 2 ist durch eine Gehäuseöffnung 3, die mit einer Rohrleitung verbindbar ist, in den Gehäusesitz 4 einlegbar. Die Montage der Armaturenspindel 5 mit daran im Bereich des Verschlußstückes 2 dichtend befestigten Faltenbalg 6 erfolgt von außen durch den Gehäusehals 7. Dieser verfügt über eine im Durchmesser abgestufte Innenkontur 8, die so bemessen ist, daß die Spindel 5 mit angeschweißten Faltenbalg 6 und an dessen gehäuseseitigen Ende 9 angeschweißten Buchse 10 in das Gehäuse 1 eingeschoben werden kann. Die Durchmesser 11 und 12 der Innenkontur 8 des Gehäusehalses 7 sind in Abhängigkeit von der Verwendung findenden Verbindungstechnik zwischen Spindel 5 und Verschlußstück 2 gewählt. Falls die Spindel 5 mit dem Verschlußstück 2 verschraubt wird, dann erfolgt die Verschraubung bei in dem Gehäusesitz 4 liegenden Verschlußstück 2. Die Buchse 10 befindet sich dann bei gelängtem Faltenbalg 6 im Bereich der Innenkontur 11 und die Spindel 5 kann problemlos bei mitdrehendem Faltenbalg 6 in das Verschlußstück 2 eingeschraubt werden. Buchse 10 und Faltenbalg 6 haben genügend Freiraum innerhalb der Innenkontur 8, um die Drehbewegung mit ausführen zu können. Nach Fertigstellung der Verbindung und innerhalb des Ventilsitzes 4 ausgerichteten Verschlußstück 2 kann die Buchse 10 in den Durchmesserbereich 12 eingepreßt werden und zwar derart, daß der Faltenbalg selbst torsionsfrei innerhalb des Gehäuses 1 gelagert ist.

Bei einer beispielsweise zweiteilig ausgebildeten Gehäusebauart, bei der das Gehäuse durch einen Deckel verschlossen ist, ist es problemlos möglich, die Buchse 10 dichtend innerhalb eines dann Verwendung findenden Deckelteiles anzuordnen. Je nach Bauart kann dabei die Buchse von innen oder von außen in den Deckel eingepreßt werden.

Durch entsprechende Wahl der Passungen zwischen Buchse 10 und Durchmesserbereich 12 erfolgt beim Einpressen der Buchse 10 eine dichtende und drehfeste Anpressung. Um im Bereich einer Massenfertigung eine zusätzliche Sicherheit zu erhalten, kann zwischen Buchse 10 und Durchmesserbereich 12 ein zusätzliches Dichtungs- oder Klebemittel Anwendung finden.

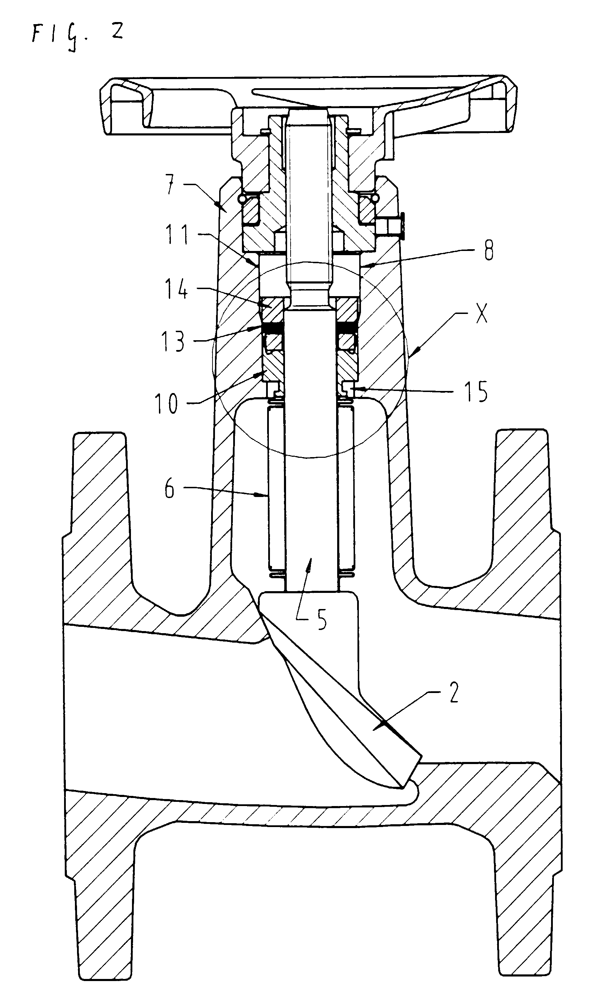

In der Fig. 2 ist eine erfindungsgemäße Art der Anpressung der Buchse 10 dargestellt. Und zusätzlich ist am faltenbalgfernen Ende der Buchse 10 eine Art Notstopfbuchse angeordnet. Diese besteht aus einem die Spindel 5 umgebenden Dichtungsring 13, der von einem im Bereich des Durchmessers 11 der Innenkontur 8 angeordneten Anpreßelement 14 angepreßt ist. Dies verhindert einen Zutritt von einem eventuell innerhalb des Gehäusehalses 7 sich bildenden Kondensat zur Buchse 10.

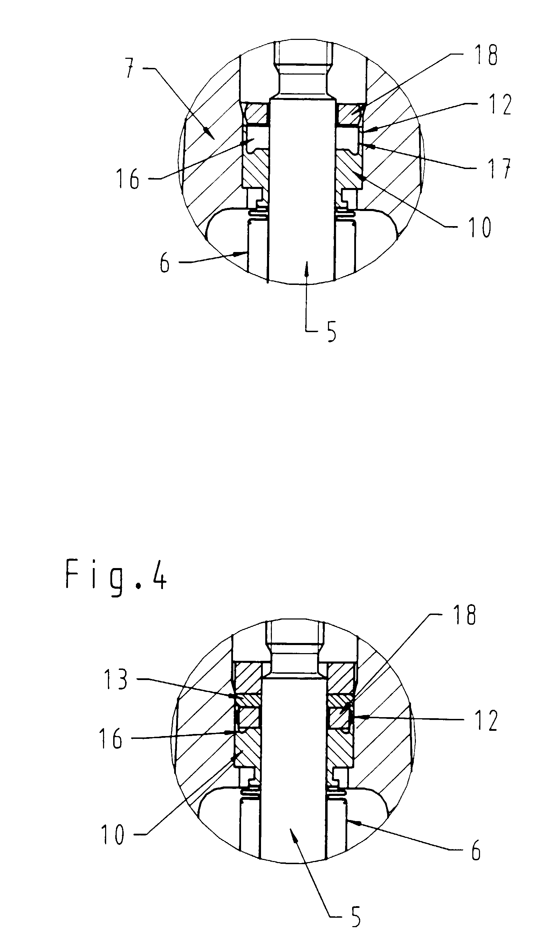

Die in Fig. 2 als Einzelheit X eingekreiste Buchse 10 ist in Fig. 3 in vergrößerter Darstellung gezeigt. Die Darstellung zeigt die Buchse 10 in der Vormontageposition. Der Außendurchmesser der Buchse 10 ist so bemessen, daß sich die Buchse 10 mit dem daran angeschweißten Faltenbalg 6 und der daran wiederum aufgeschweißten Spindel 5 im Durchmesserbereich 12 frei drehen kann. Die Spindel 5 kann aufgrund der hier zulässigen Drehung in das Verschlußstück 2 eingeschraubt werden.

Weiter ist aus der Fig. 3 ersichtlich, daß an der vom Faltenbalg 6 abgewandten Seite der Buchse 10, die Stirnseite der Buchse mit einem Raum 16 versehen ist. Dieser ist durch eine dünne Wand 17 gegenüber dem Gehäusehals 7 getrennt. Die Wand 17 kann auch als ein über die Buchsenstirnseite hinausragenden zylindrischen Vorsprung betrachtet werden. Ein hier als Druckelement ausgebildetes Spannelement 18, welches ein- oder mehrteilig sein kann, ist so bemessen, daß es beim Einpressen in den Raum 16 die Wandfläche 17 dichtend gegen den Durchmesserbereich 12 des Gehäusehalses 7 anpreßt. Diese Art der Herstellung einer Verbindung erfordert einen geringeren Kraftaufwand, als wenn die Buchse 10 über ihre gesamte Länge in den Durchmesserbereich 12 hineingepreßt werden muß. Und mit dieser Art der Festlegung und Abdichtung der Buchse innerhalb des Gehäusehalses 7 wird zu einem gewollten Zeitpunkt eine zuverlässige Dichtwirkung und sichere Drehfixierung der Buchse 10 bewirkt. Das Druckelement 18 kann aus einem hochfesten Material bestehen und weist im montierten Zustand eine hohe innere Druckspannung auf. Diese bewirkt, quasi als Federelement, eine elastische Anpressung der Wandfläche 17 an den Durchmesserbereich 12. Dies ist besonders bei Wechselbeanspruchungen der Armatur von großer Bedeutung und verhindert ein eventuelles Undichtwerden bzw. Lösen dieser Verbindung.

Fig. 4 zeigt die Buchse 10 in der Endmontageposition. Der Druckring 18 ist in den Freiraum 16 gepreßt und erzeugt durch sein äußeres Übermaß im Durchmesser eine vorbeschriebene Pressung im Bereich 12. Zum Schutz vor eventuell anfallendem, korrosiven Kondensat kann das Druckelement 18 auch durch die Dichtung 13 gesichert werden.

## Patentansprüche

1. Armatur, mit im Gehäuse angeordneter Spindel (5), an der ein Verschlußstück (2) angeordnet ist und eine im Gehäuse (1, 7) befindliche Spindeldurchführung durch einen Faltenbalg (6) abgedichtet ist, das gehäuseseitige Faltenbalgende mit einer die Spindel (5) umgebenden Buchse (10) dicht verbunden ist, die Buchse (10) in das Gehäuse (1, 7) eingebracht und darin dichtend angeordnet ist, wobei die Buchse (10) durch ein Spannelement (18) gehalten ist, **dadurch gekennzeichnet,** daß die Stirnseite der Buchse (10) an der vom Faltenbalg (6) abgewandten Seite einen Raum (16) aufweist, der Raum (16) durch eine dünne Wand (17) gegenüber dem Gehäusehals (7) getrennt angeordnet ist, und das Spannelement (18) in den Raum (16) eingepreßt ist.

2. Armatur nach Anspruch 1, dadurch gekennzeichnet, daß das Spannelement (18) ein Druckelement ist.

3. Armatur nach Anspruch 1 oder 2, dadurch gekennzeichnet, daß das Spannelement (18) die Wandfläche (17) dichtend und fixierend an den Gehäusehals (7) preßt.

4. Armatur nach Anspruch 1, 2 oder 3, dadurch gekennzeichnet, daß zwischen Gehäuse (1, 7) und Buchse (10) ein Dichtmittel angeordnet is.

5. Armatur nach einem der Ansprüche 1 bis 4, dadurch gekennzeichnet, daß die Buchse (10) in das Gehäuse (1, 7) eingepreßt ist.

6. Armatur nach einem der Ansprüche 1 bis 5, dadurch gekennzeichnet, daß die Buchse (10) von der Gehäuseaußenseite oder der Gehäuseinnenseite eingebracht ist.

7. Armatur nach einem der Ansprüche 1 bis 6, dadurch gekennzeichnet, daß in der Spindeldurchführung (15), ein an der Stirnseite der Buchse (10) anliegendes, die Spindel (5) umgebendes Dichtelement (13) angeordnet ist.

8. Armatur nach Anspruch 7, gekennzeichnet durch ein auf das Dichtelement (13) einwirkendes Anpreßelement (14).

9. Armatur nach einem oder mehreren der Ansprüche 1 bis 8, dadurch gekennzeichnet, daß das Gehäuse (1) einteilig ausgebildet ist.

## Claims

1. Tap fitting, with a spindle (5) which is arranged in the housing and on which a closing element (2) is arranged, and a spindle lead-through in the housing (1, 7) is sealed by a bellows (6), the end of the bellows on the housing side is connected in a sealed manner to a sleeve (10) surrounding the spindle (5), the sleeve (10) is introduced into the housing (1, 7) and is arranged therein in a sealing manner, the sleeve (10) being held by a clamping element (18), characterized in that the end face of the sleeve (10) has on the side remote from the bellows (6) a space (16), the space (16) is arranged such that it is separated from the housing neck (7) by a thin wall (17), and the clamping element (18) is pressed into the space (16).

2. Tap fitting according to Claim 1, characterized in that the clamping element (18) is a pressure-exerting element.

3. Tap fitting according to Claim 1 or 2, characterized in that the clamping element (18) presses the wall surface (17) in a sealing and fixing manner against the housing neck (7).

4. Tap fitting according to Claim 1, 2 or 3, characterized in that a sealant is arranged between the housing (1, 7) and the sleeve (10).

5. Tap fitting according to one of Claims 1 to 4, characterized in that the sleeve (10) is pressed into the housing (1, 7).

6. Tap fitting according to one of Claims 1 to 5, characterized in that the sleeve (10) is introduced from the outside of the housing or the inside of the housing.

7. Tap fitting according to one of Claims 1 to 6, characterized in that there is arranged in the spindle lead-through (15) a sealing element (13) which bears against the end face of the sleeve (10) and surrounds the spindle (5).

8. Tap fitting according to Claim 7, characterized by a pressure-exerting element (14) acting on the sealing element (13).

9. Tap fitting according to one or more of Claims 1 to 8, characterized in that the housing (1) is designed as one part.

## Revendications

1. Robinet comprenant une tige (5) disposée dans le corps, sur laquelle est disposé un obturateur (2) et un passage de tige se trouvant dans le corps (1, 7) est rendu étanche par un joint soufflet (6), l'extrémité du joint à soufflet située côté corps est raccordée hermétiquement à un manchon (10) entourant la tige (5), le manchon (10) est inséré dans le corps (1, 7) et disposé dans celui-ci de manière hermétique, le manchon (10) étant retenu par un élément de serrage (18), **caractérisé en ce que** la face frontale du manchon (10) présente un espace (16) du côté opposé au joint soufflet (6), l'espace (16) est séparé du col (7) du corps par une paroi mince (17), et l'élément de serrage (18) est enfoncé dans l'espace (16).

2. Robinet selon la revendication 1, caractérisé en ce que l'élément de serrage (18) est un élément de compression.

3. Robinet selon la revendication 1 ou 2, caractérisé en ce que l'élément de serrage (18) presse la surface de paroi (17) de manière hermétique et fixante contre le col (7) du corps.

4. Robinet selon la revendication 1, 2 ou 3, caractérisé en ce qu'entre le corps (1, 7) et le manchon (10) est disposé un moyen d'étanchéité.

5. Robinet selon l'une quelconque des revendications 1 à 4, caractérisé en ce que le manchon (10) est enfoncé dans le corps (1, 7).

6. Robinet selon l'une quelconque des revendications 1 à 5, caractérisé en ce que le manchon (10) est inséré depuis le côté extérieur du corps ou depuis le côté intérieur du corps.

7. Robinet selon l'une quelconque des revendications 1 à 6, caractérisé en ce que dans le passage de tige (15) est disposé un élément d'étanchéité (13) entourant la tige (5), s'appliquant contre la face frontale du manchon (10).

8. Robinet selon la revendication 7, caractérisé par un élément de compression (14) agissant sur l'élément d'étanchéité (13).

9. Robinet selon une ou plusieurs des revendications 1 à 8, caractérisé en ce que le corps (1) est conçu d'une seule pièce.
